# EUROPEAN PATENT APPLICATION

(11) **EP 1 657 156 A1**
(43) Date of publication of application: **17.05.2006**
(21) Application number: 04027183.5
(22) Date of filing: 16.11.2004
(51) Int. Cl.: B64D 33/02

(54) **An air intake appliance for an aircraft engine**

(71) Applicant: SAAB AB, 581 88 Linköping (SE)
(72) Inventor: Bergman, Mats, 595 52 Mjölby (SE); Ellström, Hans, 589 35 Linköping (SE)
(74) Representative: Holmberg, Magnus

(57) **Abstract**

The invention relates to an air intake appliance for an aircraft engine. At least one channel wall (1) of the air intake appliance (20) is provided on at least a part of its inner surface with several essentially parallel ducts (2) arranged side by side for conducting hot gas along said inner surface of the channel wall in order to transfer heat from the hot gas to the channel wall and thereby prevent formation of ice on the outer surface (1 a) thereof. Said ducts comprise alternately arranged inflow ducts (2a) and outflow ducts (2b). Distribution means (10, 24) are provided for distributing hot gas to the inflow ducts (2a), and the inflow ducts (2a) are so connected to the outflow ducts (2b) that the hot gas from the distribution means (10, 24) will first flow through an inflow duct (2a) and thereafter through an outflow duct (2b). The invention also relates to an aircraft engine provided with such an air intake appliance.

## Description

### FIELD OF THE INVENTION AND PRIOR ART

The present invention relates to an air intake appliance for an aircraft engine according to the preamble of claim 1 and an aircraft engine provided with such an air intake appliance.

In this description and the subsequent claims the term "air intake appliance for an aircraft engine" refers to a structure that is designed to receive ambient air and direct the air towards the aircraft engine, i.e. a structure designed to supply the aircraft engine with the required intake air.

An air intake appliance of the above-indicated type is provided with an air intake channel for guiding the intake air towards the aircraft engine. This channel is at its upstream end provided with an inlet turned towards the flying direction of the associated aircraft so as to efficiently bring ambient air to flow into the channel. Supercooled water may follow the intake air into the channel via the inlet and impinge upon the walls of the channel during flight. In order to prevent such supercooled water from forming ice that may follow the intake air into the engine and cause damages to the engine, the air intake appliance is normally provided with means for heating the channel walls so as to thereby vaporize supercooled water that impinges upon the channel walls.

One frequently used technique for achieving the required heating of a channel wall of an air intake appliance for an aircraft engine is to conduct pressurized hot air from the compressor of the aircraft engine through parallel ducts arranged along the inner surface of the channel wall. The hot air will heat the inner surface of the channel wall and the heat will be conducted through the wall so as to produce the desired vaporization of supercooled water that impinges upon the outer surface of the wall. The temperature of the pressurized hot air drawn off from the compressor of the aircraft engine can be very high during certain operating conditions, which will cause locally very high temperatures in the channel wall. These high wall temperatures will often imply that it is impossible to construct the channel wall of aluminium, since aluminium is a material sensitive to the high temperatures that may occur. Therefore, the channel wall is normally made of steel or titanium, which are materials that are heavier and more costly than aluminium. This will consequently make the air intake appliance relatively costly and heavy.

### OBJECT OF THE INVENTION

The object of the present invention is to find a solution to the above-indicated problem of very high channel wall temperatures in an air intake appliance of the above-indicated type.

### SUMMARY OF THE INVENTION

According to the invention, said object is achieved by means of an air intake appliance having the features of claim 1.

According to the invention, the essentially parallel ducts arranged side by side on the inner surface of the channel wall for conducting hot gas along said inner surface comprise alternately arranged inflow ducts and outflow ducts, the inflow ducts being so connected to the outflow ducts that the hot gas will first flow through an inflow duct and thereafter through an outflow duct. Consequently, the temperature of the hot gas flowing through the outflow ducts will be lower than the temperature of the hot gas flowing through the inflow ducts, and the alternate arrangement of these ducts implies that this temperature difference will be essentially equalized when the heat is conducted through the underlying channel wall. With these alternately arranged inflow ducts and outflow ducts it will therefore be possible to reduce the maximum temperature of the channel wall caused by the hot gas as compared to a corresponding channel wall provided with conventionally arranged hot gas conducting ducts with no such alternately arranged inflow ducts and outflow ducts. By a suitable adaptation of the duct system it will be possible to reduce said maximum temperature to such an extent that the channel wall can be made of aluminum. Which consequently will reduce the costs and the weight of the air intake appliance.

Preferred embodiments of the inventive air intake appliance will appear from the independent claims and the subsequent description.

The invention also relates to an aircraft engine provided with the inventive air intake appliance.

### BRIEF DESCRIPTION OF THE DRAWINGS

The invention will in the following be more closely described by means of embodiment examples, with reference to the appended drawings, where:
- Fig 1: is a schematical illustration of a channel wall of an air intake appliance according to the present invention,
- Fig 2: is a schematical, partly cut perspective view of an air intake appliance according to the invention, and
- Fig 3: is a schematical perspective view of an aircraft engine provided with an air intake appliance according to the invention.

### DETAILED DESCRIPTION OF PREFERRED EMBODIMENTS OF THE INVENTION

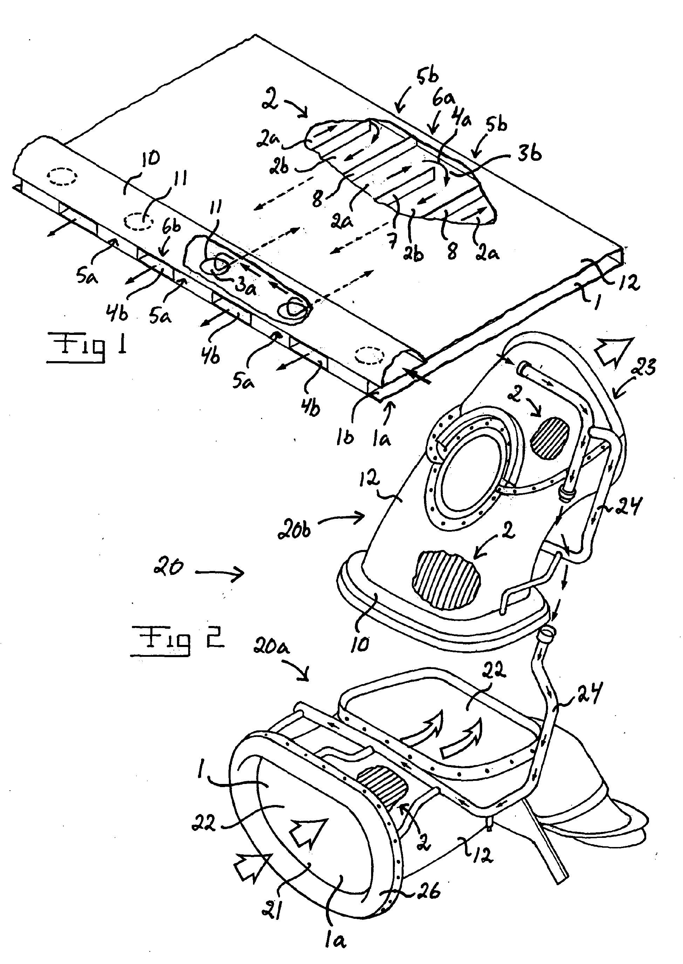

Fig 1 schematically shows a part of a channel wall 1 of an air intake appliance according to the present invention. This figure illustrates the basic principle of the invention. The channel wall 1 is formed by metal plate, preferably of aluminium. It has an outer surface 1a facing the air intake channel of the air intake appliance and an opposite inner surface 1b, i.e. the intake air guided through the air intake appliance towards the associated aircraft engine will flow along the outer surface 1a of the channel wall. The channel wall 1 is provided on its inner surface 1b, or at least a part thereof, with several essentially parallel ducts 2 arranged side by side for conducting hot gas along said inner surface 1b in order to transfer heat from the hot gas to the channel wall and thereby prevent formation of ice on the outer surface 1a thereof. The heat is transferred from the hot gas in the respective duct into the channel wall and is then conducted through the channel wall so as to heat the outer surface thereof.

Said ducts 2 comprise several first ducts 2a, in the following denominated inflow ducts, and several second ducts 2b, in the following denominated outflow ducts. These inflow ducts 2a and outflow ducts 2b are alternately arranged as seen in the cross-direction of the ducts. Preferably, the inflow ducts 2a and outflow ducts 2b are alternately arranged in such a manner that every second duct is an inflow duct 2a and every second an outflow duct 2b, as illustrated in Fig 1. Consequently, as seen in the cross-direction of the ducts 2, each inflow duct 2a is preferably followed by an outflow duct 2b and each outflow duct 2b followed by an inflow duct 2a.

The air intake appliance is provided with distribution means for distributing hot gas to the inflow ducts 2a. The distribution means are intended to be connected to a piping that supplies pressurized hot gas from the aircraft engine to the distribution means. Said hot gas is preferably pressurized hot air drawn off from a compressor of the aircraft engine. A distribution pipe 10 included in said distribution means is shown in Fig 1. This distribution pipe 10 is provided with several openings 11 communicating with a respective inlet 3a of an inflow duct 2a. Consequently, each inflow duct 2a illustrated in Fig 1 is provided with an inlet 3a that is connected to the distribution pipe 10 so as to receive pressurized hot gas therefrom. In the embodiment illustrated in Fig 1, the distribution pipe 10 extends in the cross-direction of the inflow and outflow ducts 2a, 2b, above them, and said openings 11 are provided at the bottom of the distribution pipe 10. The associated inlets 3a of the inflow ducts 2a are located directly underneath the respective opening 11. Furthermore, the inlet 3a of the respective inflow duct 2a is located near a closed first end 5a of the inflow duct 2a so that the received hot gas will be forced to flow along the inflow duct towards an outlet 4a located at the opposite second end 6a thereof. The inlet 3a may, alternatively, be located directly in the first end 5a of the inflow duct.

The inflow ducts 2a are so connected to the outflow ducts 2b that the hot gas from the distribution means will first flow through an inflow duct 2a and thereafter through an outflow duct 2b. Consequently, the inlet 3b of an outflow duct 2b is connected to the outlet 4a of an inflow duct 2a. Furthermore, the inlet 3b of the respective outflow duct 2b is located near a closed first end 5b of the outflow duct 2b so that the received hot gas will be forced to flow along the outflow duct towards an outlet 4b located at the opposite second end 6b thereof. The inlet 3b may, alternatively, be located directly in the first end 5b of the outflow duct. From the outlet 4b of the respective outflow duct 2b the hot gas may be discharged to the surroundings or conducted to any other desired part of the aircraft.

Suitably, the respective outflow duct 2b is arranged to conduct the hot gas in the opposite direction as compared to the adjacent inflow ducts 2a, as illustrated in Fig 1. Preferably, the inflow ducts 2a and outflow ducts 2b are arranged in pairs, each of which consisting of an inflow duct 2a and an outflow duct 2b, as illustrated in Fig 1. In each pair, the inflow duct 2a is located directly adjacent to the outflow duct 2b and has its outlet 4a connected to the inlet 3b of the associated outflow duct 2b. The inflow duct 2a and outflow duct 2b of the respective pair are suitably separated by means of a common partition wall 7, preferably of heat conducting material. In the embodiment illustrated in Fig 1, the partition wall 7 between the inflow duct 2a and outflow duct 2b of the respective pair is somewhat shorter than the partition walls 8 between adjacent pairs, thereby forming an opening that connects the inflow duct 2a and outflow duct 2b of the pair.

An outer skin 12 is located essentially in parallel with the channel wall 1. The inflow and outflow ducts 2a, 2b are arranged between this outer skin 12 and the channel wall 1. The outer skin 12 is shown partly cut in Fig 1 so as to reveal some of the ducts that are arranged on the inner surface 1b of the channel wall. The outer skin may be of another material than the channel wall, e.g. of a heat insulating and/or a fire protection material.

The channel wall 1 is preferably of aluminium, but may of course be of any other material having suitable heat conductibility and other suitable characteristics. The suitable width of the respective inflow and outflow duct 2a, 2b depends on the heat conductibility of the wall 1 and the thickness of the wall. For an aluminium wall having a thickness of 2-3 mm, the respective inflow and outflow duct 2a, 2b suitably has a width of 3-5 cm.

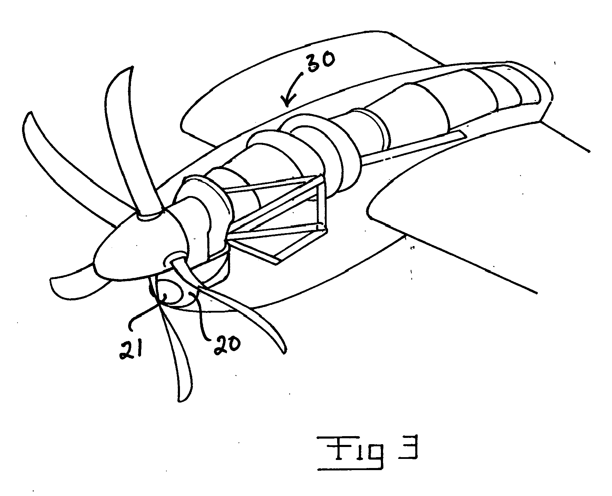

An air intake appliance 20 for an aircraft engine is schematically illustrated in Fig 2. This air intake appliance 20 comprises a lower part 20a and an upper part 20b, which are secured to each other. For the purpose of clarity, these two parts 20a, 20b are shown separated from each other in Fig 2. The lower part 20a is provided with an inlet 21 for receiving ambient air. This air is guided through an air intake channel 22 extending through the two parts 20a, 20b and leaves the air intake appliance via an outlet 23 arranged in the upper part 20b. The air intake channel 22 is formed by a number of channel walls, each of which having an outer surface 1a facing the air intake channel and an opposite inner surface.

The lower part 20a comprises a tube-shaped channel wall 1, preferably of aluminium, provided on its inner surface with several essentially parallel ducts 2 arranged side by side for conducting hot gas along said inner surface of the channel wall in order to transfer heat from the hot gas to the channel wall and thereby prevent formation of ice on the outer surface 1a thereof. These ducts are divided into alternately arranged inflow ducts and outflow ducts as described above with reference to Fig 1. The tube-shaped channel wall 1 is also provided with a distribution pipe, located behind the flange 26 that surrounds the inlet 21 of the air intake appliance, for distributing hot gas to the inflow ducts. This distribution pipe is ring-shaped and extends around said inlet 21. The upper part 20b also comprises such a channel wall having ducts 2 of the above-indicated type on its inner surface divided into alternately arranged inflow ducts and outflow ducts and a distribution pipe 10 for distributing hot gas to the inflow ducts. Preferably, all the channel walls 1 of the air intake appliance are of aluminium. The outer skin 12 of the air intake appliance is shown partly cut in Fig 2 so as to reveal some of the ducts 2 that are arranged on the inner surface of the channel walls. The ducts 2 are arranged between this outer skin 12 and the respective channel wall.

Furthermore, the air intake appliance 20 comprises a distribution manifold 24 for supplying pressurized hot gas from an aircraft engine to the distribution pipes 10 of the channel walls 1.

The air intake appliance 20 shown in Fig 2 is designed for use with an aircraft propeller engine. However, an air intake appliance according to the present invention could also be designed for use with an aircraft jet engine.

An aircraft propeller engine 30 is schematically illustrated in Fig 3. This aircraft engine 30 is provided with an air intake appliance 20 according to Fig 2 for receiving ambient air via its inlet 21 and directing the air through its air intake channel towards the aircraft engine, i.e. for supplying the aircraft engine with the required intake air. The distribution manifold of the air intake appliance 20 is preferably connected to a compressor of the aircraft engine so as to lead hot air from the compressor to the inflow ducts of the air intake appliance.

The invention is of course not in any way restricted to the preferred embodiments described above; on the contrary many possibilities to modifications thereof should be apparent to a person skilled in the art without departing from the basic idea of the invention as defined in the appended claims.

## Claims

1. An air intake appliance for an aircraft engine, the air intake appliance (20) comprising one or several channel walls (1) forming an air intake channel (22) for guiding intake air, the respective channel wall having an outer surface (1a) facing the air intake channel (22) and an opposite inner surface (1b), wherein at least one such channel wall is provided on at least a part of its inner surface (1b) with several essentially parallel ducts (2) arranged side by side for conducting hot gas along said inner surface of the channel wall in order to transfer heat from the hot gas to the channel wall and thereby prevent formation of ice on the outer surface (1a) thereof, **characterized in**
- **that** said ducts comprise several first ducts (2a), here denominated inflow ducts, and several second ducts (2b), here denominated outflow ducts,
- **that** the inflow ducts (2a) and outflow ducts (2b) are alternately arranged as seen in the cross-direction of the ducts,
- **that** the air intake appliance (20) is provided with distribution means (10, 24) for distributing hot gas to the inflow ducts (2a), and
- **that** the inflow ducts (2a) are so connected to the outflow ducts (2b) that the hot gas from the distribution means (10, 24) will first flow through an inflow duct (2a) and thereafter through an outflow duct (2b).

2. An air intake appliance according to claim 1, **characterized in that** said ducts are so arranged that every second duct is an inflow duct (2a) and every second an outflow duct (2b) as seen in the cross-direction of the ducts.

3. An air intake appliance according to claim 1 or 2, **characterized in that** the channel wall (1) provided with said ducts (2a, 2b) is of aluminium.

4. An air intake appliance according to claim 3, **characterized in that** the respective duct (2a, 2b) has a width of 3-5 cm.

5. An air intake appliance according to claim 4, **characterized in that** said aluminium wall has a thickness of 2-3 mm.

6. An air intake appliance according to any of the preceding claims, **characterized in that** the respective outflow duct (2b) is arranged to conduct the hot gas in the opposite direction as compared to the adjacent inflow ducts (2a).

7. An air intake appliance according to any of the preceding claims, **characterized in that** the inflow ducts (2a) and outflow ducts (2b) are arranged in pairs, each of which consisting of an inflow duct (2a) and an outflow duct (2b), the inflow duct (2a) of each pair having an outlet (4a) connected to an inlet (3b) of the associated outflow duct (2b).

8. An air intake appliance according to claim 7, **characterized in that** in each pair, the inflow duct (2a) is located directly adjacent to the outflow duct (2b).

9. An air intake appliance according to claim 8 **characterized in that** in each pair, the inflow duct (2a) and outflow duct (2b) are separated by means of a common partition wall (7).

10. An air intake appliance according to any of the preceding claims, **characterized in that** the distribution means comprise a distribution pipe (10), which is provided with several openings (11) communicating with a respective inlet (3a) of an inflow duct (2a).

11. An air intake appliance according to any of the preceding claims, **characterized in that** all the channel walls (1) are of aluminum.

12. An aircraft engine, **characterized in that** the aircraft engine (30) is provided with an air intake appliance (20) according to any of claims 1-11.

13. An aircraft engine according to claim 12, **characterized in that** the distribution means (10, 24) of the air intake appliance (20) is connected to a compressor of the engine so as to lead hot air from the compressor to the inflow ducts (2a) of the air intake appliance.
